(19) Europäisches Patentamt

European Patent Office

Office européen des brevets

(11) **EP 1 989 063 B1**

(12) **EUROPEAN PATENT SPECIFICATION**

(45) Date of publication and mention
of the grant of the patent:
**30.11.2011 Bulletin 2011/48**

(21) Application number: **06728457.0**

(22) Date of filing: **28.02.2006**

(51) Int Cl.:
**B60C 23/00** (2006.01)

(86) International application number:
**PCT/IT2006/000115**

(87) International publication number:
**WO 2007/099563 (07.09.2007 Gazette 2007/36)**

(54) **METHOD FOR CONTROLLING THE PRESSURE IN A WHEEL FOR VEHICLES AND WHEEL HAVING CONTROLLED PRESSURE ACCORDING TO SAID METHOD**

VERFAHREN ZUR STEUERUNG DES DRUCKS IN EINEM RAD FÜR FAHRZEUGE UND RAD MIT GESTEUERTEM DRUCK GEMÄSS DEM VERFAHREN

PROCEDE DE REGULATION DE LA PRESSION DANS UNE ROUE DE VEHICULE ET ROUE DONT LA PRESSION EST REGULEE SELON LEDIT PROCEDE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**12.11.2008 Bulletin 2008/46**

(73) Proprietor: **PIRELLI TYRE S.p.A.**
**20126 Milano (IT)**

(72) Inventor: **PIANTANIDA, Pier Giuseppe**
**I-20126 Milano (IT)**

(74) Representative: **Tansini, Elio Fabrizio**
**Bugnion S.p.A.**
**Viale Lancetti, 17**
**20158 Milano (IT)**

(56) References cited:
**EP-A2- 0 305 312       WO-A-2005/084967**
**US-A- 5 293 919**

## Description

The present invention relates to a method of controlling the pressure in a vehicle wheel. The invention also relates to a wheel having a controlled and compensated pressure, to be used for putting said method into practice.

A wheel for two-wheeled or four-wheeled vehicles generally comprises a rim coupled with a tyre that is inflated to a given operating pressure.

Said tyre generally comprises a carcass structure having at least one carcass ply, and at least one annular reinforcing structure associated with the carcass ply, a tread band of elastomer material at a radially external position to the carcass structure, a belt structure interposed between the carcass structure and tread band and a pair of sidewalls at axially opposite positions on the carcass structure.

In tubeless tyres, the tyre airtightness is ensured by the radially inner layer of said carcass structure generally called "liner". When in use, due to the natural air loss through said radially inner layer (which layer at all events is never perfectly impervious to air), pressure within the tyre decreases thereby obliging the vehicle driver to carry out periodical restoration of same.

In an attempt to make the tyre pressure substantially constant over a rather long period of time, it was suggested use of rims internally housing a tank for gas under pressure at a higher pressure than the operating pressure of the tyre. By one or more valves suitably operated, pressure is restored when required.

Patent US 6,601,625 B2 discloses a wheel with a compressed air tank integrated into the rim. More specifically it is disclosed a high pressure tank to store compressed air from an outer source, a first mechanical valve allowing the compressed air to flow from a source external to the high pressure tank, a second mechanical valve allowing air passage from the high pressure tank to the inner tube of the tyre, a third valve releasing air from the inner tube of the tyre, and a fourth valve releasing air from the high pressure tank. The wheel described in said patent keeps the tyre pressure within a predetermined value in a mechanical manner, reducing the necessity for the vehicle driver to manually inflate the tyre to reach the desired pressure. When pressure within the tyre decreases under a predetermined threshold value, the air stored in the high pressure tank is released into the tyre maintaining the latter inflated to the desired minimum pressure; on the contrary, when pressure in the tyre increases beyond a predetermined threshold value, the air is released from the tyre to the surrounding atmosphere.

Patent US 4,067,376 depicts a system for automatic readmission of the air lost from a tyre while the vehicle is running in order to minimise the effects of an explosion. The wheel is formed with an integrated annular bag adapted to store an amount of compressed air under high pressure. A pressure safety valve is placed between said bag and the tyre and is adapted to release air from the bag to the tyre each time pressure within the tyre decreases below a predetermined limit.

US 5,293,919 refers to a self-regulating tire pressure system and method employing a bistable valve that allows air from a high pressure reservoir to replenish the pressure within a tire when it has fallen below an actuating pressure, and discontinues its operation only after the tire pressure has increased to a closing pressure that is greater than the actuating pressure. The valve includes a bistable diaphragm that receives a reference pressure on one side and the tire pressure on its opposite side, and snaps between two stable positions respectively opening and closing the valve in response to the tire pressure falling below the actuating pressure and then increasing to the closing pressure.

WO 2005/084967 in the name of the same Applicant proposes insertion of a valve between a tank of fluid under pressure associated with the rim of a wheel and the tyre mounted on said rim, which valve is designed to compensate for pressure variations with respect to variations in the room temperature by an elastic element having a variable elastic constant in response to temperature variations, so as to keep the valve to a closed position when the inner pressure of the tyre decreases due to a temperature reduction. In this way, restoration of the operating pressure in the tyre is carried out only when the pressure has gone down as a result of true air losses (micropunctures, lack of airtightness of the liner, etc.) and not for reasons connected with lowering of the room temperature. Thus pressure' in the tyre is maintained constant over long periods of time, due to the fact that the operating duration of the tank of fluid under pressure is increased, the other conditions being the same.

With reference to the know devices described above, the Applicant has however perceived that in the absence of pressure in the tank, i.e. should pressure within the tank be the same as the atmospheric pressure, opening of the valve for restoration of the operating pressure would give rise, instead of the desired flowing of fluid from the tank to the tyre, to a sudden transfer of the fluid still present in the tyre itself towards the tank, which will result in an immediate deflation of the tyre.

The Applicant has found that this circumstance can be a source of danger, should a pressure loss accidentally occur in the tank, for example following breakage of same. In fact the tyre could suddenly become deflated, even while running to a high speed.

EP 305 312, corresponding with the preamble of claims 1 and 10, discloses a device for maintaining in the tyre the recommended air pressure and, in the event of a puncture, transferring an air reserve and triggering an alarm, It consists of a vessel fixed to the rim and connected to a pressure regulator connected to the tyre. The regulator consist of a body within which a cylinder is housed. A radial orifice is located laterally at the cylinder; by which the air from the reservoir will arrive. Part of the cylinder defines a pressure chamber provided with a hat which comprises in its center an opening. A piston axially moves in the cylinder according to two antagonists pushes applied at each thereof, one caused by the effective pressure existing in the tyre; the other generated by the compression of a spring adjusted to the required pressure. An axial orifice is obtained in the center of the piston, leading to the middle portion of the piston to communicate with a throat on entire circumference of the piston to communicate with the radial orifice of the cylinder. Compressed air comes whose pressure will push a ball floatingly located in the pressure chamber, to cause a sealing with the level of the head of the piston when the pressure is optimum.

The Applicant has ascertained that by providing between the tank of the fluid under pressure and the tyre, a safety valve which is able to intercept the fluid outflow towards the tank without inhibiting passage of fluid from the tank itself to the tyre, a sudden deflation of the tyre is avoided in case of fluid losses in the tank, the functional operation of the tank itself being maintained for purposes of maintenance of the operating pressure in the tyre.

More particularly, in one aspect, the invention relates to a method of controlling pressure in a vehicle wheel, in which said wheel comprises a tyre mounted on a rim, said method comprising the steps of: inflating an inner volume of the tyre to an operating pressure; admitting a fluid compressed to a first pressure higher that the operating pressure of the tyre, into a tank associated with the rim; opening a fluid communication, by at least one primary mechanical valve, between the inner volume of said tyre and said tank when pressure of the inner volume of said tyre is lower than said operating pressure; stopping the communication between said inner volume and tank when said tyre pressure is substantially equal to said operating pressure; stopping the communication between said inner volume and tank when during said opening step by means of the primary valve, the pressure value within the tank is lower than the pressure value in the tyre

Thus there is a guarantee that in case of breakage of the tank, or also in the absence of pressure for any other reason, opening of the valve adapted to cause flowing of fluid to the tyre does not cause flowing back of the fluid itself towards the tank, which would bring about deflation of the tyre.

Stopping of the fluid communication in case of weak pressure in the tank is preferably carried out by a mechanical safety valve, preferably a one-way on-off valve. Advantageously, the safety valve operates independently of the primary valve, thus avoiding undesirable structural complications in the primary valve itself and ensuring a satisfactory accuracy of intervention of said primary valve for restoration of the operating pressure of the tyre during normal running.

Opening of the fluid communication between the inner volume of the tyre and the tank can be advantageously carried out by at least one primary mechanical valve opening of which is controlled by an elastic element with an elastic constant varying in a temperature range from -50°C to +50°C so as to maintain said primary valve to a closed position following a reduction in the inner tyre pressure due to a temperature reduction within said range.

In a preferred embodiment of said method, said elastic element controlling opening of said primary valve has a value of elastic constant measured at -50 °C ($K^{-50°C}$) differing from the value of elastic constant measured at +50°C ($K^{+50°C}$) by at least 10% with respect to the value of elastic constant measured at +50°C ($K^{+50°C}$).

In a different embodiment, said elastic element controlling opening of said primary valve has a value of elastic constant measured at -50°C ($K^{-50°C}$) differing from the value of elastic constant measured at +50°C ($K^{+50°C}$) by no more than 40% with respect to the value of elastic constant measured at +50°C ($K^{+50°C}$).

Advantageously, in order to obtain wide time gaps between two manual reloading operations in succession, the ratio between said operating pressure of the tyre and said first pressure in said tank is included between about 0.1 and about 0.6.

By optimising the available volumes, in a further embodiment, the ratio between said operating pressure of the tyre and said first pressure in said tank is included between about 0.2 and about 0.4.

Advantageously, said method allows widely spread reloading devices to be used, due to the fact that said first pressure in said tank is included between about 8 and about 12 bars.

In a different preferred embodiment said first pressure in said tank is included between about 8.5 and about 10 bars.

To enable a precise maintenance of the operating pressure within the tyre, also in the presence of pressure variations within the tank also resulting from progressive consumption of the fluid stored therein, opening of the fluid communication between tyre and tank is advantageously carried out in response to a pressure gradient reduction between the tyre pressure and the ambient pressure.

To improve the steadiness of the wheel system, said step of bringing the inner volume of said tyre into communication with said tank takes place when the pressure of the inner volume of said tyre is lower than said operating pressure by at least 5%.

In a further aspect, the invention relates to a wheel having a controlled and compensated pressure, comprising: a rim associated with a tank adapted to be filled with a fluid to a first pressure; a tyre mounted on said rim and having an inner volume inflatable to an operating pressure, said operating pressure being lower than said first pressure;

In more detail, said safety valve can be a mechanical valve, preferably a one-way on-off valve.

EP 1 989 063 B1

The safety valve preferably comprises a second closure member to be made in the form of an elastic diaphragm or a ball acting against said abutment seat.

A second auxiliary elastic element can be advantageously associated with the safety valve to push said closure member towards the perimetral edge of said communication opening, so as to maintain the safety valve in a closed condition.

Said safety valve can be advantageously integrated into a valve body of said primary valve so as to be integrated with the latter in a compact assembly of reduced bulkiness capable of facilitating housing of same in the wheel rim.

In a preferred embodiment of the invention, the primary valve comprises at least one elastic element operatively associated with a closure member designed to open and close a port of said primary valve. Said elastic element preferably has an elastic constant (K) varying in a temperature range from -50°C to +50°C for example, so as to maintain the primary valve to a closed position following a reduction in the inner tyre pressure due to a temperature reduction within said range.

In a further embodiment, to divide the available volumes in an optimal manner, said tank provides for such a volume that the ratio of said volume of said tank to said inner volume of the tyre is included between about 0.1 and about 0.4.

In a different embodiment, said ratio is included between about 0.12 and about 0.25.

In a preferred embodiment, said elastic element comprises at least one spring.

In another preferred embodiment, said elastic element comprises a second spring operatively associated with said one spring.

In a different embodiment, said second spring has an elastic constant (K) that is substantially constant within a temperature range from -50°C to +50°C.

Thus more accuracy can be obtained in the possibility of modulating intervention of said primary valve in response to temperature variations. Modulation of the intervention, in fact, can specifically rely on the spring, in which materials and expedients are capable of favouring a variation of the elastic constant against the temperature, while the thrust function relies on the second spring with an elastic constant that is substantially insensitive to temperature variations.

In a preferred embodiment, said second spring supports a major portion of the load of said elastic element.

Preferably, the load supported by the second spring is included between about 60% and about 95% of the load supported by said elastic element.

More preferably, the load supported by the second spring is included between about 70% and about 80% of the load supported by said elastic element.

In another embodiment the second spring is concentrically coupled with said one spring.

In a preferred embodiment the second spring is external with respect to said one spring.

To enable an embodiment in which a thrust spring is provided, said elastic constant (K) decreases on decreasing of the temperature in said temperature range.

To obtain an embodiment in which a pulling spring is provided, said elastic constant (K) increases on decreasing of the temperature in said temperature range.

To enable restoration of the inflating pressure in the tyre to take place in a correct manner without being affected by pressure variations in the tank, the primary closure member preferably comprises a diaphragm having a first surface exposed to the pressure of the inner tyre volume, and a second surface exposed to the ambient pressure, or other reference pressure in an environment hermetically insulated from the tank.

More particularly, the primary closure member is movable relative to the primary-valve port in response to a reduction in a pressure gradient between the tyre pressure and the reference pressure.

In a preferred embodiment, said wheel comprises an inflating valve operatively associated with said tank.

In a different embodiment, said wheel comprises a control and restoration valve associated with said tyre.

In a main aspect, the invention relates to a valve assembly adapted to regulate a communication between a tank and an inner volume of a tyre to bring said tank into communication with said tyre when pressure in said tyre is lower than an operating pressure, said mechanical valve assembly comprising the features defined in any of claims 1 to 24.

Further features and advantages of the invention will become more apparent from the detailed description of some preferred but not exclusive embodiments of a wheel having a controlled and compensated pressure in accordance with the present invention.

This description will be set out hereinafter with reference to the accompanying drawings, given by way of non-limiting example, in which:

- Fig. 1 is a vertical view of a wheel in accordance with the invention;
- Fig. 2 is a side view partly in section of the wheel shown in Fig. 1;
- Fig. 3 shows an enlarged portion of said side view;
- Fig. 4 is an enlarged section of a detail of the wheel in accordance with the invention;
- Fig. 5 is a partial vertical view of a second embodiment of the wheel in accordance with the invention;

4

- Fig. 6 is a side view partly in section of the wheel shown in Fig. 5;
- Fig. 7 shows an enlarged portion of the side view shown in Fig. 6;
- Fig. 8 is a graph showing the variation of an elastic constant of an element in said wheel upon varying of the temperature.
- Fig. 9 schematically shows a detail of a preferred embodiment in accordance with the invention.

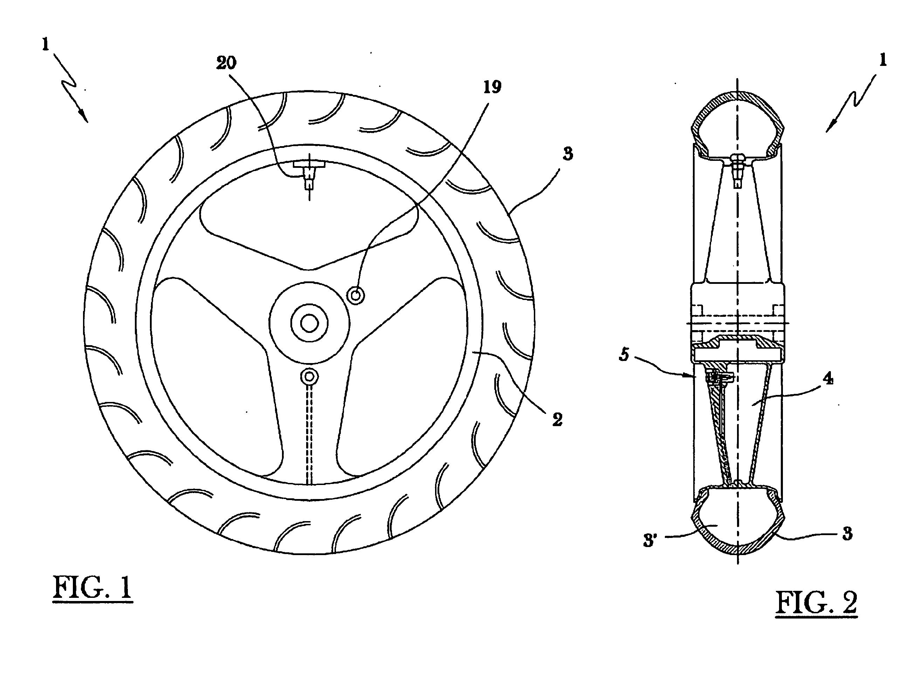

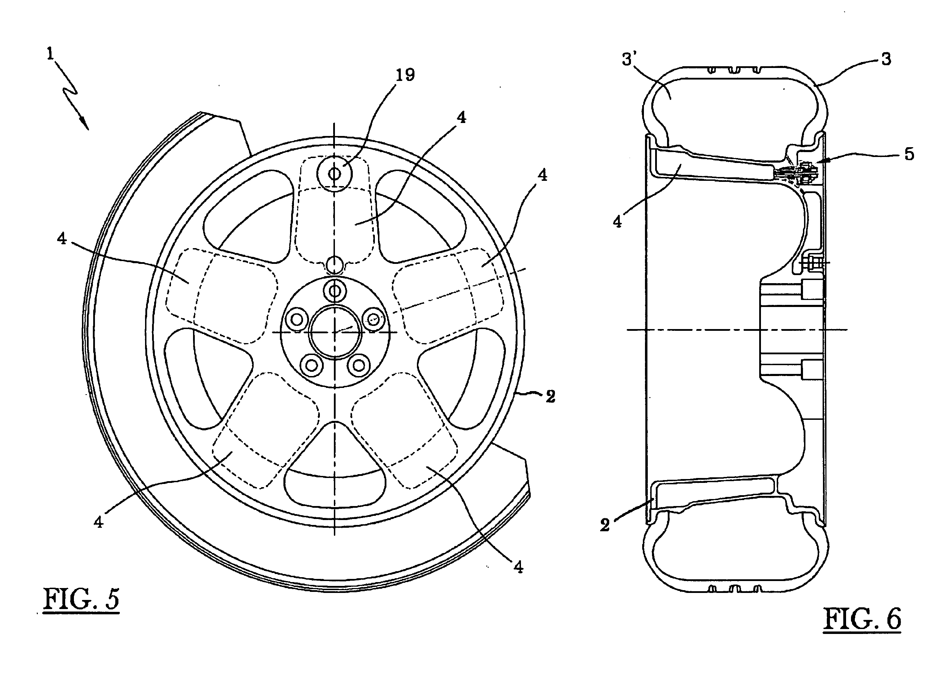

As shown in Figs. 1, 2, 5 and 6, wheel 1 for two-wheeled vehicles (Figs. 1, 2) or four-wheeled vehicles (Figs. 5, 6) in accordance with the invention, comprises a rim 2 on which a tyre 3 of an inner volume 3' is mounted. Provided in rim 2 is a tank 4 associated with said rim and preferably integrated into the latter, said tank being suitable to contain a fluid under pressure, said fluid being air or a substantially inert gas such as nitrogen, for example.

In accordance with a preferred embodiment, the ratio between the operating pressure of tyre 3 and a first pressure existing in said tank 4, when fully loaded varies between about 0.1 and about 0.6, preferably between about 0.2 and about 0.4.

According to a further preferred embodiment, the ratio between the volume of said tank 4 and said inner volume 3' of the tyre is included between about 0.1 and about 0.4, preferably between about 0.12 and about 0.25.

The rim 2 preferably houses a primary mechanical valve 5 at a radially internal position not far from the rotation centre of the wheel, which valve allows communication between tank 4 and the inner volume 3' of tyre 3 to be regulated.

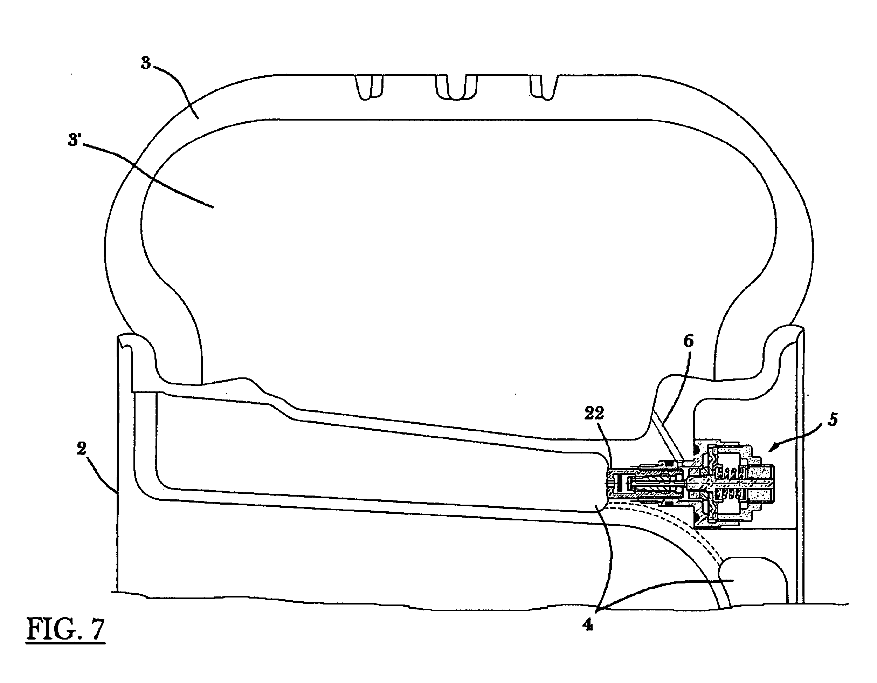

Preferably, said communication is obtained by providing, within rim 2, a duct 6 connecting said primary valve 5 witch the inner volume of said tyre 3, said primary valve 5 further providing a connection with said tank 4 either directly through a communication opening 25 and/or or through a further duct 6' (Fig. 7).

Said primary valve 5 preferably comprises a valve body 7 housed in a suitable seat 8 formed in said rim 2, which valve body has a first port 9 for connection with said tank 4 and a second port 10 for connection with said tyre 3 and therefore preferably connected with said duct 6.

As shown in Figs. 2, 3, 6 and 7, said.valve body 7 is provided, internally of the axially external end, i.e. preferably at the opposite end of said first port 9, with a base disc 11 on which an elastic element rests, which elastic element preferably comprises at least one spring 12 housed in a space 11a.

Advantageously, said spring 12 is made of a material preferably selected from the so-called "shape memory alloy" (SMA) materials, in such a manner that its elastic constant K greatly depends on temperature.

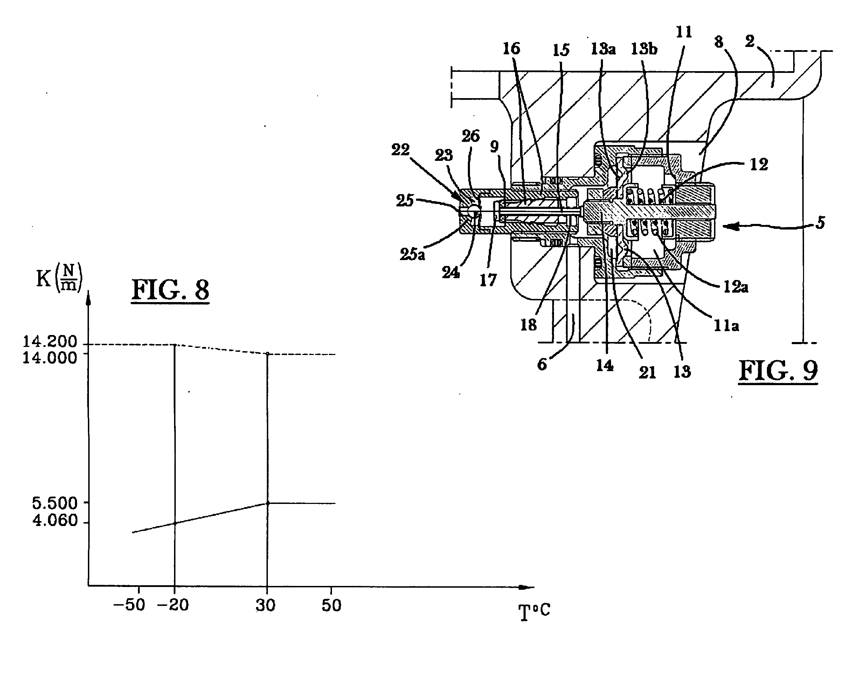

For example, as shown in the graph in Fig. 8, it is possible to see that such dependence, in a graph Temperature (x axis)/Value of the elastic constant K (y axis) is substantially expressed by a straight line parallel to the x axis (chain line) for springs made of standard spring steel materials (i.e. the elastic constant is in this case substantially independent of temperature) within a predetermined temperature range, between -50°C and +50°C for example, which range, as better clarified in the following, can be coincident with the preferred temperature of use of wheel 1. Said dependence within said range is on the contrary expressed by an increasing or decreasing function for the springs 12 in accordance with the invention made of the above specified materials.

Preferably, in accordance with the invention, provision is made for use of materials having a temperature range in which the elastic constant K of the springs made with use of said materials greatly varies between about -50°C and about +50°C, said range being preferably included between about -30°C and about +50°C, and more preferably included between about -30°C and about +20°C.

In particular, in the last-mentioned temperature range (-30°C/+20°C) the value of this constant K varies by approximately 26% with respect to the value found at the upper end of the range (+20°C) for a spring made of a nickel-titanium steel (diameter of the wire 1.2 mm, 2 useful coils), more specifically from about 5,500 N/m (at 20°C) to about 4,060 N/m (at -30°C).

The employed materials are in any case selected in such a manner that said variation is included between about 10% and about 40%, preferably between about 20% and about 30% in a predetermined temperature range, at least included between -50°C and 50°C or narrower.

More specifically, spring 12 controlling opening of the primary valve 5 has a value of the elastic constant measured at the lower end of said range (at -50°C ($K^{-50°C}$) for example) differing from the value of the elastic constant measured at the upper end of said range (at +50°C ($K^{+50°C}$) for example) by at least 10% and preferably by no more than 40%, with respect to the value of the elastic constant measured at the upper end of said range (at +50°C ($K^{+50°C}$) for example), that is to say:

$$\Delta K = \frac{|K^{+50°C} - K^{-50°C}|}{K^{+50°C}} * 100 \geq 10\%$$

and

$$\Delta K = \frac{|K^{+50°C} - K^{-50°C}|}{K^{+50°C}} * 100 \leq 40\%$$

According to said preferred solution, such dependence on temperature of the elastic constant is represented by a function increasing in said predetermined temperature range (Fig. 8).

Finally, in the same Fig. 8 it is possible to see that a spring made of a traditional spring steel, a UNI steel Class C for example, has a substantially constant value of the elastic constant K in the same temperature range (-30°C/+20°C), said value being substantially equal to about 14,000 N/m at +20 °C and equal to about 14,200 N/m at -30°C, from which a variation ΔK equal to about 1.43% is drawn (diameter 1.2 mm, 3.5 useful coils).

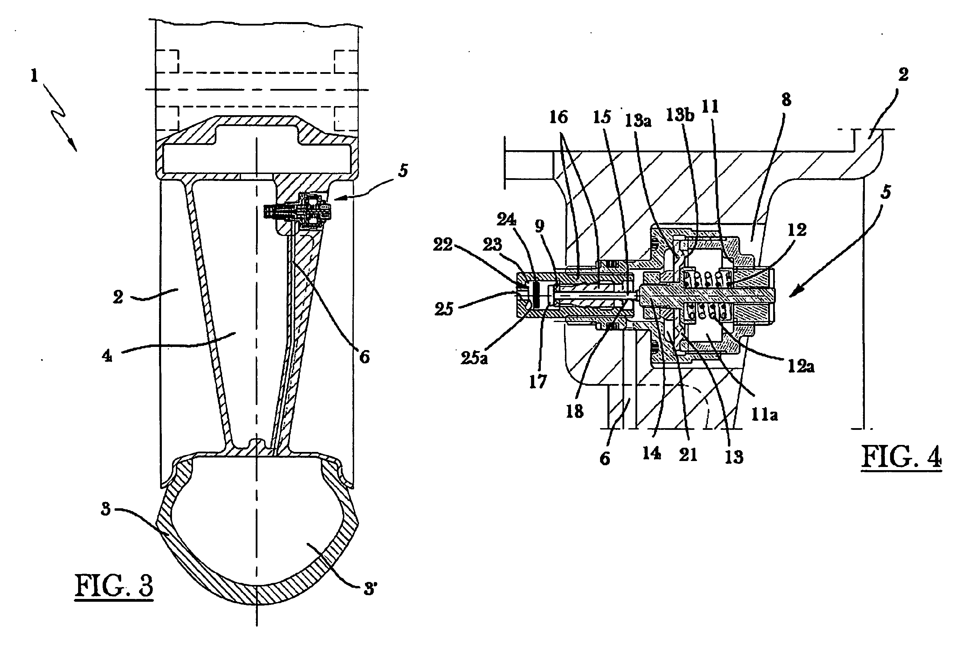

In a preferred embodiment, as shown in Fig. 4, said elastic element 12, 12a comprises a second spring 12a operatively associated with spring 12. In particular, the second spring 12a is a spring made of traditional spring steel (e.g. UNI steel Class C), the spring 12 being made of shape memory alloy (SMA) materials as above explained. Therefore, the elastic constant K of the second spring 12a is substantially constant in a temperature range included between -50°C and +50°C.

Preferably, springs 12 and 12a are concentrically coupled, so that the second spring 12a is external with respect to spring 12. Preferably, the load supported by said elastic element is divided between springs 12 and 12a in such a manner that the second spring 12a supports the major portion of said load. Consequently, valve 5 increases its sensitivity to temperature variation, because the spring 12 supports only a small load. Within this preferred embodiment and considering a Force/Elongation diagram, the load supported by spring 12 lies in a region of the diagram in which the curve is not asymptotic, i.e. a region in which the ratio between force and elongation is substantially linear. In a preferred embodiment, the load supported by said second spring 12a is included between about 60% and about 95% of the load supported by said elastic element, and more preferably between about 70% and about 80%.

As shown in Figs. 2, 3, 4, 6 and 7, spring 12 is advantageously associated with a diaphragm 13 delimiting, by its axial position, the volume of a bag 21 communicating with said duct 6 and with the axially internal end of said valve body 7, i.e. the portion thereof close to the first port 9.

In more detail, the diaphragm 13 has a first surface 13a facing the bag 21 which is exposed to pressure of duct 6 and of the inner volume 3' of tyre 3, and a second surface 13b which is exposed to a reference pressure present in the space 11a housing the springs 12, 12a and confined between the diaphragm itself and the base disc 11, which is hermetically insulated relative to tank 4. The space 11a can communicate with the external environment, in which case the reference pressure will correspond to the ambient pressure present externally of the wheel 1. Said diaphragm 13 is connected to a cap 14 extended in an axial direction, the other end of which can come into contact with a needle 15 housed in a bush 16 and terminating with a primary closure member 17 having an enlarged head, intervention of which allows passage of fluid through said first port 9 or not. Needle 15 is further maintained in place by another elastic element, such as a closing spring 18 for example.

To prevent any undesirable flowing back of fluid from tyre 3 to tank 4, at least one safety valve 22, preferably of the mechanical type, is advantageously provided, said valve being operatively interposed between the inner volume 3' of the tyre and the tank itself.

The safety valve 22 preferably consists of a one-way on-off valve, advantageously integrated into the same valve body 7 housing the primary valve. In more detail, the safety valve 22 is preferably housed in one end of bush 16 axially facing tank 4, in which provision is made for a cavity 23 containing the primary closure member 17 belonging to the primary valve 5.

The safety valve 22 comprises a second closure member 24 housed in the holding cavity 23 as well and acting against an abutment seat defined by a perimetral edge 25a of a communication opening 25 connecting tank 4 to the inner volume 3' of tyre 3 through the holding cavity 23 and port 9.

The second closure member 24 may comprise an elastic diaphragm acting in an abutment relationship against the perimetral edge 25a, as shown in Fig. 4. In a further preferred embodiment shown in Fig. 9, the second closure member 24 comprises a ball acting in abutment relationship with the perimetral edge 25a of the communication opening 25. A further spring or other auxiliary elastic element 26 can be housed in the holding cavity 23 to urge the second closure member 24 towards the perimetral edge 25a to close the communication opening 25.

Preferably, present on rim 2 is an inflation valve 19 directly in communication with tank 4, whereas in a further preferred embodiment a control and restoration valve 20 is provided that is in communication with the inner volume 3' of tyre 3.

Pressure control and compensation within said wheel 1 take place as follows.

First, by a standard compressor for example, air is admitted into tank 4, preferably through the inflation valve 19 to a given room temperature, of 15, 20, 25°C or other value for example, said temperature being here and in the following identified as reference temperature TR.

Initially tyre 3 is deflated, so that spring 12, preloaded to a given reference value in relation to the desired operating pressure within the tyre (that can generally vary from about 1.7 to about 5.5 bars, depending on the different tyre types), exerts pressure on the diaphragm 13 bringing cap 14 to act against needle 15, which action leads the closure member 17 to open the passage through port 9 thereby connecting tank 4 to bag 21 and therefrom to duct 6 and tyre 3.

When pressure within tyre 3 reaches the prescribed operating pressure, this pressure also exerts its action on the first surface 13a of diaphragm 13. The gradient between the inner pressure of tyre 3 acting against the first surface 13a of the diaphragm 13, and the ambient pressure or other reference pressure present in the space 11a and acting against the second surface 13b of the diaphragm itself, overcomes the spring 12 preload and causes separation of cap 14 from needle 15. The positioning spring 18 brings needle 15 back to the rest position dragging along the primary closure member 17 therewith to a closed position, thus inhibiting passage of fluid under pressure from tank 4 to bag 21. Then tank 4 is loaded to its rated capacity, generally included between 8 and 12 bars, more preferably between 8.5 and 10 bars.

During operation of the vehicle on which wheels 1 in accordance with the invention are mounted, small air losses occur due either to an imperfect airtightness of the radially inner layer of the tyre carcass structure, or to an imperfect adhesion between the tyre bead and the rim flange on which the bead bears, said pressure losses being quantifiable to about 0.1 bars/month. By reducing pressure in the inner volume 3' of tyre 3, i.e. the pressure gradient between the inner tyre pressure and the ambient pressure or other reference value present in the space 11a, this reduction is transmitted to the bag 21 through duct 6. Consequently spring 12 acts against diaphragm 13 and moves the primary closure member 17 as above described to the open position, until pressure in the tyre, through bag 21 and therefore diaphragm 13, balances the force exerted by the calibration preload of spring 12.

Advantageously, the primary valve 5 is calibrated so that it begins operating only after the reduction in pressure within the inner volume 3' has reached at least 5% of the operating pressure; in other words, taking into account what previously stated, such a reduction must preferably be included between about 0.085 and about 0.275 bars. In this way steadiness to the wheel assembly is ensured, small reloading operations being avoided when minimum pressure losses occur. This is due to the fact that, when the primary valve 5 is closed, pressure in tank 4 acts on the respective port 9 over the whole contact area of the closure member 17, while when the valve is open the action area of the same pressure corresponds to the only cross section of needle 15.

When the vehicle is not running and the external temperature decreases, due to the known gas laws the pressure within the tyre starts decreasing as well, of about 0.1 bar on an average every 10°C of reduction with respect to the reference temperature TR. However, the elastic constant K of spring 12 advantageously depends on the temperature in the terms previously illustrated (in the example shown in Fig. 8 relating to a Ni/Ti steel, K decreases of about 5.24% every -10°C), so that with a temperature reduction the constant too decreases, causing a reduction in the calibration preload as well. In this way the pressure reduction that is transferred to bag 21 from the inside of tyre 3 does not activate spring 12 because the spring preload is substantially decreased to such a value that it keeps balanced in spite of the reduced tyre pressure.

In this manner wheel 1 is not submitted to useless loading cycles due to possible high thermal ranges of the room temperature that would bring to a quick consumption of the fluid stored inside tank 4, which fluid would then be discharged when the tyre temperature approaches the reference temperature TR again, by means of valve 20, for example. Said valve 20 in a preferred embodiment is designed to avoid sudden overpressures, in case of failure of the primary valve 5 for example, and when it is necessary to control pressure within the inner volume 3' of the tyre, also allowing the tyre inflation.

It is to be noted that the provided range in accordance with the invention within which said elastic constant varies substantially comprises the room temperature of normal operation of the tyre. This means that the concerned wheel 1 when it has to operate to such temperatures, has a temperature-compensated pressure control because the primary valve 5 does not start operation if the pressure reduction is only due to variations in the room temperature.

Also to higher temperatures with respect to the upper limit of said range an important variation in said elastic constant K does not occur but this fact is irrelevant as regards the correct operation of wheel 1. In fact, when it is hot (at temperatures higher than TR) the tyre is self-balancing, i.e. the higher pressure due to the high temperatures is used to support it under those operating conditions.

It is further to be noticed that still when it is hot, the higher pressure existing within tyre 3, being transferred into bag 21, further compresses spring 12, which spring avoids every reloading by increasingly moving away from cap 14.

In case of pressure loss from tank 4, following break or failure of the inflation valve 19, the primary valve 5 keeps in a closed position until a pressure reduction within tyre 3 occurs such as to cause displacement of the closure member 17 upon command of spring 12. In the absence of the safety valve 22 the consequent opening of port 9 for the purpose of achieving the desired restoration of the inner pressure of tyre 3, would on the contrary cause escape of the whole fluid present in the tyre itself towards tank 4, bringing about a consequent sudden deflation of same.

Advantageously, the safety valve 22 inhibits occurrence of the drawback described above. In fact, when the primary valve 5 opens in the absence of pressure or in the presence of an insufficient pressure within tank 4, the second closure member 24 is pushed against the corresponding abutment seat 25 by the pressure itself that is present in tyre 3, any flowing back of the fluid from the tyre to tank 4 being eliminated. Thus a safe running is ensured also in the absence of pressure in tank 4.

Finally it will be recognised that the inner arrangement of the elements of the primary valve 5 can be easily modified so as to have a closure member that is opened by effect of a pulling action of spring 12 and not of a thrusting action as previously illustrated. In this case the elastic constant K of the elastic element must increase on decreasing of the temperature in the previously mentioned temperature ranges, in order to obtain the same operation of said primary valve 5.

**Claims**

1. A method of controlling pressure in a vehicle wheel, in which said wheel comprises a tyre (3) mounted on a rim (2), said method comprising the steps of:

   - inflating an inner volume (3') of the tyre (3) to an operating pressure;
   - admitting a fluid compressed to a first pressure higher that the operating pressure of the tyre (3), into a tank (4) associated with the rim (2);
   - opening a fluid communication, by at least one primary mechanical valve (5), between the inner volume (3') of said tyre (3) and said tank (4) when pressure in the inner volume (3') of said tyre (3) is lower than said operating pressure;
   - stopping the communication between said inner volume (3') and tank (4) when said pressure of the tyre (3) is substantially equal to said operating pressure;
   - stopping the communication between said inner volume (3') and tank (4) when during said opening step by means of the primary valve (5), the pressure value within the tank (4) is lower than the pressure value in the tyre (3), wherein said step of stopping the communication between said inner volume (3') and tank (4) should the pressure value within the tank (4) be lower than the pressure value in the tyre (3), is carried out by closing a communication between the inner volume (3') of said tyre, (3) and the tank (4) by a mechanical safety valve (22) associated with the primary valve (5),

   **characterized in that**
   said primary valve (5) comprises a valve body (7) having a first port (9) for connecting with said tank (4) through a communication opening (25), and a second port (10) for connecting with said tyre (3), and **in that** said safety valve (22) comprises a second closure member (24) acting against an abutment seat (25a) defined by a perimetral edge of the communication opening (25).

2. A method as claimed in claim 1, wherein said safety valve (22) is a one-way on-off valve.

3. A method as claimed in one or more of the preceding claims, wherein said opening step is controlled by an elastic element (12, 12a) having an elastic constant (K) varying on varying of the temperature, so as to maintain said primary valve (5) to a closed position following a reduction in the inner pressure of the tyre (3), due to a temperature reduction within a predetermined temperature range.

4. A method as claimed in one or more of the preceding claims, wherein the ratio between said operating pressure of the tyre (3) and said first pressure in said tank (4) is included between about 0.1 and about 0.6.

5. A method as claimed in one or more of the preceding claims, wherein said first pressure in said tank (4) is included between about 8 and about 12 bars.

6. A method as claimed in one or more of the preceding claims, wherein said step of opening the fluid communication is carried out in response to a pressure gradient reduction between the pressure of the tyre (3) and a reference pressure present in an environment hermetically insulated from the tank (4).

7. A method as claimed in one or more of the preceding claims, wherein said step of opening the fluid communication between the inner volume (3') of said tyre (3) and said tank (4) is carried out when the pressure of said tyre (3) is lower than said operating pressure by at least 5%.

8. A method as claimed in one or more of claims 3 to 7, wherein said elastic constant (K) decreases on decreasing of the temperature.

9. A method as claimed in one or more of claims 3 to 7, wherein said elastic constant (K) increases on decreasing of the temperature.

10. A mechanical valve assembly adapted to regulate a communication between a tank (4) and an inner volume (3') of a tyre (3) to bring said tank (4) into communication with said tyre (3) when pressure in said tyre (3) is lower than an operating pressure, said mechanical valve assembly comprising a primary mechanical valve (5) associated with at least one safety valve (22), wherein said safety valve is operatively interposed between a duct (6) adapted to be connected to the inner volume (3') of said tyre (3) and a communication opening (25) to be connected to the tank (4), to stop communication between said duct (6) and said communication opening (25) should a pressure value within the duct (6) be lower than a pressure value in the communication opening (25),
   **characterized in that**
   said primary valve (5) comprises a valve body (7) having a first port (9) for connection with said tank (4) through said communication opening (25), and a second port (10) for connection with said tyre (3), and **in that** said safety valve (22) comprises a second closure member (24) acting against an abutment seat (25a) defined by a perimetral edge of the communication opening (25).

11. A valve assembly as claimed in claim 10, wherein said safety valve (22) is a mechanical valve.

12. A valve assembly as claimed in claim 10 or 11, wherein said safety valve (22) is a one-way on-off valve.

13. A valve assembly as claimed in claim 10, wherein said second closure member (24) comprises an elastic diaphragm acting in abutment relationship with said abutment seat (25a).

14. A valve assembly as claimed in claim 10, wherein said second closure member (24) comprises a ball acting in abutment relationship with said abutment seat (25a).

15. A valve assembly as claimed in one or more of claims 10 to 14, where said safety valve (22) further comprises an auxiliary elastic element (26) to push said second closure member (24) towards said abutment seat (25a).

16. A valve assembly as claimed in one or more of claims 10 to 15, wherein said safety valve (22) is integrated into a valve body of said primary valve (5).

17. A valve assembly as claimed in one or more of claims 10 to 16, wherein said primary valve (5) comprises at least one elastic element (12, 12a) operatively associated with at least one primary closure member (17) designed to open and close at least one port (9) of said primary valve (5).

18. A valve assembly as claimed in claim 17, wherein said elastic element (12, 12a) has an elastic constant (K) varying in such a manner as to maintain the primary valve (5) to a closed position following a pressure reduction in said duct (6), due to a temperature reduction within a predetermined range.

19. A valve assembly as claimed in claim 18, wherein the elastic constant of said elastic element (12, 12a) varies within a temperature range included between about -50°C and about +50°C.

20. A valve assembly as claimed in one or more of claims 17 to 19, wherein said elastic element comprises one spring (12).

21. A valve assembly as claimed in claim 20, wherein said elastic element (12, 12a) comprises a second spring (12a) operatively associated with said one spring (12).

22. A valve assembly as claimed in claim 21, wherein said second spring (12a) has an elastic constant (K) substantially constant within a temperature range from -50°C to +50°C.

23. A valve assembly as claimed in claim 22, wherein said second spring (12a) supports a major portion of the load of said elastic element (12, 12a).

24. A valve assembly as claimed in claim 23, wherein the load supported by the second spring (12a) is included between about 60% and about 95% of the load supported by said elastic element (12, 12a).

25. A valve assembly as claimed in claim 23, wherein the load supported by the second spring (12a) is included between about 70% and about 80% of the load supported by said elastic element (12, 12a).

26. A valve assembly as claimed in one or more of claims 21 to 25, wherein the second spring (12a) is concentrically coupled to said one spring (12).

27. A valve assembly as claimed in claim 26, wherein the second spring (12a) is external with respect to said one spring (12).

28. A valve assembly as claimed in one or more of claims 17 to 27, wherein said elastic constant (K) decreases on decreasing of the temperature in said temperature range.

29. A valve assembly as claimed in one or more of claims 17 to 27, wherein said elastic constant (K) increases on decreasing of the temperature in said temperature range.

30. A valve assembly as claimed in one or more of claims 17 to 29, wherein said primary closure member (17) comprises a diaphragm (13) having a first surface (13a) adapted to be exposed to the pressure of duct (6), and a second surface (13b) exposed to a reference pressure present in an environment (11a) hermetically insulated from said communication opening (25).

31. A valve assembly as claimed in claim 30, wherein the second surface (13b) of the diaphragm (13) is exposed to an ambient pressure present externally of the valve assembly.

32. A valve assembly as claimed in either of claims 30 or 31, wherein the primary closure member (17) is movable relative to the port (9) of the primary valve (5) in response to a reduction in a pressure gradient between the pressure acting against said first surface (13a) and against said second surface (13b) of the diaphragm (13), respectively.

33. A valve assembly as claimed in one or more of claims 17 to 32, wherein said primary valve (5) brings said duct (6) into communication with said communication opening (25) when the pressure in the duct (6) is lower than said operating pressure by at least 5%.

34. A wheel (1) having a controlled pressure, comprising:

   - a rim (2) associated with a tank (4) adapted to be filled with a fluid to a first pressure;
   - a tyre (3) mounted on said rim and having an inner volume (3') inflatable to an operating pressure, said operating pressure being lower than said first pressure; and
   - at least a mechanical valve assembly according to any of claims 11 to 34.

35. A wheel as claimed in claim 34, wherein said tank (4) is integrated into said rim (2).

36. A wheel as claimed in one or more of claims 34 to 35, wherein said tank (4) involves such a volume that the ratio between said volume of said tank (4) and said inner volume (3') of the tyre is included between about 0.1 and about 0.4.

37. A wheel as claimed in claim 36, wherein said ratio is included between about 0.12 and about 0.25.

38. A wheel as claimed in one or more of claims 34 to 37, wherein said wheel (1) comprises an inflating valve (19) operatively associated with said tank (4).

39. A wheel as claimed in one or more of claims 34 to 38, wherein said wheel (1) comprises a control and restoration valve (20) associated with said tyre (3).

**Patentansprüche**

1. Verfahren zum Regeln des Drucks in einem Fahrzeugrad, wobei das Rad einen Reifen (3) aufweist, der an einer Felge (2) angebracht ist, wobeida s Verfahrenals Schritteaufweist:

- dasAufblaseneines inneren Volumens (3') des Reifens (3) bis zu einem Betriebsdruck;
- das Einbringen eines Fluids,das mit einem ersten Druckkomprimiert ist, der höheristals der Betriebsdruck des Reifens (3), in einen Tank (4), welcher der Felge (2) zugeordnetist;
- das Öffnen einer Fluid verbindung durch wenigstens ein primäresmechanisches Ventil (5) zwischen dem inneren Volumen (3') des Reifens (3) und dem Tank (4), wenn ein Druck in dem inneren Volumen (3') des Reifens (3) niedriger als der Betriebsdruck ist;
- das Unterbrechen der Verbindung zwischen dem inneren Volumen (3') und dem Tank (4), wenn der Druck des Reifens (4) im Wesentlichengleich dem Betriebsdruck ist;
- das Unterbrechen der Verbindung zwischen dem inneren Volumen (3') und dem Tank (4), wenn während des Öffnungsschritts durch das primäre Ventil (5) der Druck wertinnerhalb desTanks (4) geringer ist als der Druckwert in dem Reifen (3) wobei der Schritt des Unterbrechens der Verbindung zwischen dem inneren Volumen (3') und dem Tank (4), falls der Druckwert in dem Tank (4) niedrigerals der Druckwert in dem Reifen (3) sein sollte, durch Schließeneiner Verbindung zwischendem inneren Volumen (3') des Reifens (3) und dem Tank (4) über ein mechanisches Sicherheitsventil (22) ausgeführt wird, das dem Primärventil (5) zugeordnet ist,

**dadurch gekennzeichnet, dass**
das Primärventil (5) einen Ventilkörper (7) mit einem ersten Anschluss (9) zum Verbinden mit dem Tank (4) durch eine Verbindungsöffnung (25) undeinen zweiten Anschluss (10) zum Verbinden mit dem Reifen (3) aufweist, und dass das Sicherheitsventil (22) ein zweites Verschlusselement (24) aufweist, das gegeneinen Anlagesitz (25a) wirt, der durch eine Umfangskanteder Verbindungsöffnung (25) definiert wird.

2. Verfahren nach Anspruch 1, bei dem das Sicherheitsventil (22) ein Einweg-Auf-Zu-Ventilist.

3. Verfahren nach einem oder mehreren der vorherigen Ansprüche, bei dem der Öffnungsschritt durch ein elastisches Element (12, 12a) mit einer Elastizitätskonstante (K), die sich beim Verändern der Temperatur verändert, so geregel twird, dass es das Primärventil (5) in einer geschlossenen Position im Anschlussan eine Verringerung des inneren Drucks des Reifens (3) aufgrund einerTemperaturverringerung innerhalbeines vorherfestgelegten Temperaturbereichs hält.

4. Verfahren nach einem oder mehreren der vorherigen Ansprüche, bei dem das Verhältnis zwischen dem Betriebsdruck des Reifens (3) und dem ersten Druck in demTank (4) zwischen ungefähr 0, 1 und ungefähr 0,6 liegt.

5. Verfahren nach einem oder mehreren der vorherigen Ansprüche, bei dem der erste Druck in demTank (4) zwischen ungefähr 8 und ungefähr 12 bar liegt.

6. Verfahren nach einem oder mehreren der vorherigen Ansprüche, bei dem der Schritt des Öffnensder Fluid verbindung in Abhängigkeit von einer Verringerung des Druckgradienten zwisch endem Druckdes Reifens (3) und einem Referenzdruck, der in einer Umgebungvorhanden ist, die hermetisch von dem Tank (4) isoliert ist, ausgeführt wird.

7. Verfahren nach einem oder mehreren der vorherigen Ansprüche, bei dem der Schritt des Öffnens der Fluid verbindung zwischen dem inneren Volumen (3') des Reifens (3) un d dem Tank (4) ausgeführt wird, wenn der Druck des Reifens (3) um wenigstens 5% niedriger ist als der Betriebsdruck.

8. Verfahren nach einem oder mehreren der Ansprüche 3 bis 7, bei dem die Elastizitätskonstante (K) bei abnehmen der Temperaturabnimmt.

9. Verfahren nach einem oder mehreren der Ansprüche 3 bis 7, bei dem die Elastizitätskonstante (K) bei abnehmen der Temperaturansteigt.

10. Mechanische Ventilanordnung, die dafürangepasst ist, eine Verbindung zwischen einemTank (4) und einem inneren Volumen (3') eines Reifens (3) zuregeln, um den Tank (4) in Verbindung mit dem Reifen (3) zu bringen, wenn ein Druck in dem Reifen (3) niedriger ist als ein Betriebs druck, wobei die mechanischeventil anordnung ein primäresmechanisches Ventil (5) aufweist, das wenigstens einem Sicherheitsventil (22) zugeordnet ist, wobei das Sicherheitsventil operativ zwischen einem Durchlass (6), der dafür vorgesehen ist, mit dem inneren Volumen (3') des Reifens (3) verbunden zu werden, und eine Verbindungsöffnung (25), die mit dem Tank (4) zu verbinden ist, eingefügt ist, um eine Verbindung zwischen dem Durchlass (6) und der Verbindungsöffnung (25) zu unterbrechen, falls ein Druckwertinnerhalbdes Durchlasses (6) niedrigerals ein Druckwert in der Verbindungsöffnung (25) sein sollte, **dadurch gekennzeichnet, dass**
das Primärventil (5) einen Ventilkörper (7) mit einem ersten Anschluss (9) zur Verbindung mit dem Tank (4) durch die Verbindungsöffnung (25) und einen zweiten Anschluss (10) zur Verbindung mit dem Reifen (3) aufweist, und dass das Sicherheitsventil (22) ein zweites Verschlusselement (24) aufweist, das gegen einen Anlagesitz (25a) wirkt, der durch eine Umfangskante der Verbindungsöffnung (25) definiert ist.

11. Ventilanordnung nach Anspruch 10, bei der das Sicherheitsventil (22) einmechanischesVentilist.

12. Ventilanordnung nach Anspruch 10 oder 11, bei der das Sicherheitsventil (22) ein Einweg-Auf-Zu-Ventilist.

13. Ventilanordnung nach Anspruch 10, bei der das zweite Verschlusselement (24) eineelastischeMembranaufweist, die in einer Anlagebeziehungmit dem Anlagesitz (25a) wirkt.

14. Ventilanordnung nach Anspruch 10, bei der das zweite Verschlusselement (24) einenBallaufweist, derin einer Anlagebeziehungmi t dem Anlagesitz (25a) wirkt.

15. VentilanordnungnacheinemodermehrerenderAnsprüche 10 bis 14, bei der das Sicherheitsventil (22) fernerein elastischesHilfselement (26) aufweist, um das zweite Verschlusselement (24) gegenden Anlagesitz (25a) zu drücken.

16. Ventilanordnung nach einem oder mehreren der Ansprüche 10 bis 15, bei der das Sicherheitsventil (22) in einen Ventilkörperde s Primärventils (5) eingebautist.

17. Ventilanordnung nach einemoder mehrerende r Ansprüche 10 bis 16, bei der das Primärventil (5) wenigstensein elastischesElement (12, 12a) aufweist, das operativ dem wenigstens einen primären Verschlusselement (17) zugeordnet ist, das dafürausgestaltet ist, wenigstens einenAnschluss (9) des Primärventils (5) zu öffnenund z u schließen.

18. Ventilanordnungnac h Anspruch17, bei der das elastische Element (12, 12a) eineElastizitätskonstante (K) aufweist, die sich so verändert, dass sie das Primärventil (5) in einergeschlossenen Positionim Anschlussan eine Druckverringerungin dem Durchlass (6) aufgrund einer Temperaturverringerung innerhalbeines vorherfestgelegten Bereichshält.

19. Ventilanordnung nach Anspruch 18, bei der sich die Elastizitätskonstantede s elastischen Elements (12, 12a) innerhalbeinesTemperaturbereichs verändert, der zwischenungefähr -50°C und ungefähr+50°Cliegt.

20. VentilanordnungnacheinemodermehrerenderAnsprüche 17 bis 19, bei der das elastische Element eine Feder (12) aufweist.

21. Ventilanordnungnac h Anspruch20, bei der das elastische Element (12, 12a) eine zweite Feder (12a) aufweist, die operativ der einen Feder (12) zugeordnetist.

22. Ventilanordnungnac h Anspruch21 , bei der die zweite Feder (12a) eine Elastizitätskonstante (K) aufweist, die innerhalbei n e s Temperaturbereichs von -50°C zu +50°Cim Wesentlichenkonstant ist.

23. Ventilanordnungnac h Anspruch22 , bei der die zweite Feder (12a) einen Großteil der Last de s elastischen Elements (12, 12a) trägt.

24. Ventilanordnungnac h Anspruch23 , bei der die Last, die vonder zweiten Feder (12a) getragen wird, zwischen ungefähr 60 % un d ungefähr 95 % der Lastliegt, die von demelastischenElement (12, 12a) getragenwird.

25. Ventilanordnung nach Anspruch 23, bei der die Last, die von der zweiten Feder (12a) getragen wird, zwischen ungefähr70 % und ungefähr 80% der Lastliegt, die von demelastischenElement (12, 12a) getragenwird.

26. Ventilanordnung nach einem oder mehreren der Ansprüche 21 bis 25, bei der die zweite Feder (12a) konzentrisch mit der einen Feder (12) gekoppeltist.

27. Ventilanordnung nach Anspruch 26, bei der die zweite Feder (12a) außerhalbder einen Feder (12) liegt.

**28.** Ventilanordnung nach einem oder mehreren der Ansprüche 1 7 bis 27, bei der die Elastizitätskonstante (K) beim Abnehmende r Temperatur innerhalbde s Temperaturbereichs abnimmt.

**29.** Ventilanordnungnac h einemode rmehrerende r Ansprüche 1 7 bis 27, bei der die Elastizitätskonstante (K) beim Abnehmen der Temperatur innerhalb des Temperaturbereichs ansteigt.

**30.** Ventilanordnung nach einem oder mehrerende ansprüche 1 7 bis 29, bei der das primäre Verschlusselement (17) eine Membran (13) aufweist, die eine erste Oberfläche (13a), die dafürangepasstist, dem Druck des Durchlasses (6) ausgesetztzu werden, und eine zweite Oberfläche (13b) aufweist, die einemReferenzdruck ausgesetzt ist , der in einer Umgebung (11a) vorhanden ist, die hermetisch von der Verbindungs öffnung (25) isoliertist.

**31.** Ventilanordnungnach Anspruch30 , bei der die zweite Oberfläche (13b) der Membran (13) einem Umgebungsdruck ausgesetzt ist, der außerhalb der Ventilanordnung vorhandenist.

**32.** Ventilanordnungnach Anspruch30 oder 31, bei der das primäreVerschlusselement (17) in Bezugauf den Anschluss (9) des Primärventils (5) aufgrundeiner Verringerung in einem Druckgradienten im Druck, der jeweils gegen die erste Oberfläche (13a) und die zweite Oberfläche (13b) der Membran (13) wirkt, beweglich ist.

**33.** Ventilanordnung nach einem oder mehreren der Ansprüche 17 bis 32, bei der das Primärventil (5) den Durchlass (6) in Verbindung mit der Verbindungsöffnung (25) bringt, wennder Druckin dem Durchlass (6) um wenigstens 5% niedriger als der Betriebsdruck ist.

**34.** Rad (1) mit einemgeregeltenDruck,mit:

- einerFelge (2) die einemTank (4) zugeordnetist, der da für vorgesehen ist, mit einem Fluidmit einem ersten Druckgefüllt zu sein;
- einemReifen (3) der ander Felgeangebracht ist und ein inneres Volumen (3') aufweist, das mit einem Betriebsdruck aufpumpbar ist, wobei der Betriebsdruckniedriger istals der erste Druck; und
- wenigstens einer mechanischen Ventilanordnung nach einemder Ansprüche 11 bis 34.

**35.** Rad nach Anspruch 34, bei dem der Tank (4) in die Felge (2) eingebaut ist.

**36.** Rad nach einem oder mehreren der Ansprüche 34 bis 35, bei dem der Tank (4) ein solches Volumen aufweist, dass das Verhältnis zwischen dem Volumen des Tanks (4) und dem inneren Volumen (3') des Reifenszwischenungefähr 0,1 und ungefähr 0,4 liegt.

**37.** Rad nach Anspruch 36, bei dem das Verhältnis zwischen ungefähr 0,1 2 un d ungefähr 0,25 liegt.

**38.** Rad nach einem oder mehreren der Ansprüche 34 bis 37, wobei das Rad (1) ein Füllventil (19) aufweist, das operativ dem Tank (4) zugeordnet ist.

**39.** Rad nach einem oder mehreren der Ansprüche 34 bis 38, wobei das Rad (4) ein Regelungs- und Wieder herstellungsventil (20) aufweist,das dem Reifen (3) zugeordnetist.

**Revendications**

**1.** Procédé de régulation de la pression dans une roue de véhicule, dans lequel la roue comporte un pneu (3) monté sur une jante (2), ledit procédé comportant les étapes de :

- gonfler un volume intérieur (3') du pneu (3) à une pression de fonctionnement ;
- admettre un fluide comprimé à une première pression supérieure à la pression de fonctionnement du pneu (3), dans un réservoir (4) associé à la jante (2) ;
- ouvrir une communication de fluide, par au moins une valve mécanique primaire (5), entre le volume intérieur (3') du pneu (3) et le réservoir (4) lorsque la pression dans le volume intérieur (3') du pneu (3) est inférieure à ladite pression de fonctionnement ;
- arrêter la communication entre le volume intérieur (3') et le réservoir (4) lorsque la pression du pneu (3) est sensiblement égale à la pression de fonctionnement ;

- arrêter la communication entre le volume intérieur (3') et le réservoir (4) lorsque pendant l'étape d'ouverture au moyen de la valve primaire (5), la valeur de la pression à l'intérieur du réservoir (4) est inférieure à la valeur de la pression dans le pneu (3), dans lequel l'étape d'arrêt de la communication entre le volume intérieur (3') et le réservoir (4) si la valeur de pression à l'intérieur du réservoir (4) est inférieure à la valeur de pression dans le pneu (3), est effectuée par la fermeture d'une communication entre le volume intérieur (3') du pneu (3) et le réservoir (4) par une valve de sécurité mécanique (22) associée à la valve primaire (5),

**caractérisé en ce que** la valve primaire (5) comporte un corps de valve (7) ayant un premier port (9) pour raccorder avec le réservoir (4) à travers un orifice de communication (25), et un deuxième port (10) pour raccordement avec le pneu (3), et **en ce que** la valve de sécurité (22) comporte un deuxième organe de fermeture (24) agissant contre un siège de butée (25a) défini par un bord périmétrique de l'orifice de communication (25).

2. Procédé selon la revendication 1, dans lequel la valve de sécurité (22) est une valve marche-arrêt anti-retour.

3. Procédé selon l'une au moins des revendications précédentes, dans lequel l'étape d'ouverture est contrôlée par un élément élastique (12, 12a) ayant une constante élastique (K) variant sur une variation de la température, de façon à maintenir la valve primaire (5) en une position fermée après une diminution de la pression intérieure du pneu (3), en raison d'une diminution de la température dans une plage de températures prédéterminée.

4. Procédé selon l'une au moins des revendications précédentes, dans lequel le rapport entre ladite pression de fonctionnement du pneu (3) et la première pression dans le réservoir (4) est compris entre environ 0,1 et environ 0,6.

5. Procédé selon l'une au moins des revendications précédentes, dans lequel la première pression dans le réservoir (4) est comprise entre environ 8 et environ 12 bars.

6. Procédé selon l'une au moins des revendications précédentes, dans lequel l'étape d'ouverture de la communication de fluide est effectuée en réponse à une diminution du gradient de pression entre la pression du pneu (3) et une pression de référence présente dans un environnement isolé hermétiquement du réservoir (4).

7. Procédé selon l'une au moins des revendications précédentes, dans lequel l'étape d'ouverture de la communication de fluide entre le volume intérieur (3') du pneu (3) et le réservoir (4) est effectuée lorsque la pression du pneu (3) est inférieure d'au moins 5% à la pression de fonctionnement.

8. Procédé selon une ou plusieurs des revendications 3 à 7, dans lequel la constante élastique (K) diminue lorsque la température diminue.

9. Procédé selon l'une au moins des revendications 3 à 7, dans lequel la constante élastique (K) augmente lorsque la température augmente.

10. Assemblage de valve mécanique adapté pour réguler une communication entre un réservoir (4) et un volume intérieur (3') d'un pneu (3) pour mettre le réservoir (4) en communication avec le pneu (3) lorsque la pression dans le pneu (3) est inférieure à une pression de fonctionnement, l'assemblage de valve mécanique comportant une valve mécanique primaire (5) associée à au moins une valve de sécurité (22), dans lequel la valve de sécurité est fonctionnellement intercalée entre un conduit (6) apte à être raccordé au volume intérieur (3') du pneu (3), et un orifice de communication (25) à raccorder au réservoir (4), pour arrêter la communication entre le conduit (6) et l'orifice de communication (25) si une valeur de pression dans le conduit (6) est inférieure à une valeur de pression dans l'orifice de communication (25), **caractérisé en ce que** la valve primaire (5) comporte un corps de valve (7) ayant un premier port (9) pour raccordement avec le réservoir (4) au travers de l'orifice de communication (25), et un deuxième port (10) pour raccordement avec le pneu (3), et **en ce que** la valve de sécurité (22) comporte un deuxième organe de fermeture (24) agissant contre un siège de butée (25a) défini par un bord périmétrique de l'orifice de communication (25).

11. Assemblage de valve selon la revendication 10, dans lequel la valve de sécurité (22) est une valve mécanique.

12. Assemblage de valve selon la revendication 10 ou 11, dans lequel la valve de sécurité (22) est une valve marche-arrêt anti-retour.

13. Assemblage de valve selon la revendication 10, dans lequel le deuxième organe de fermeture (24) comporte une membrane élastique agissant en relation de butée avec le siège de butée (25a).

14. Assemblage de valve selon la revendication 10, dans lequel le deuxième organe de fermeture (24) comporte une bille agissant en relation de butée avec le siège de butée (25a).

15. Assemblage de valve selon l'une au moins des revendications 10 à 14, dans lequel la valve de sécurité (22) comporte en outre un élément élastique auxiliaire (26) pour pousser le deuxième organe de fermeture (24) vers le siège de butée (25a).

16. Assemblage de valve selon l'une au moins des revendications 10 à 15, dans lequel la valve de sécurité (22) est intégrée dans un corps de valve de la valve primaire (5).

17. Assemblage de valve selon l'une au moins des revendications 10 à 16, dans lequel la valve primaire (5) comporte au moins un élément élastique (12, 12a) fonctionnellement associé à au moins un organe de fermeture primaire (17) conçu pour ouvrir et fermer au moins un port (9) de la valve primaire (5).

18. Assemblage de valve selon la revendication 17, dans lequel l'élément élastique (12, 12a) a une constante élastique (K) variant de manière à maintenir la valve primaire (5) en une position fermée après une diminution de pression dans le conduit (6), en raison d'une diminution de température dans une plage prédéterminée.

19. Assemblage de valve selon la revendication 18, dans lequel la constante élastique de l'élément élastique (12, 12a) varie dans une plage de températures comprise entre environ -50°C et environ +50°C.

20. Assemblage de valve selon l'une au moins des revendications 17 à 19, dans lequel l'élément élastique comporte un premier ressort (12).

21. Assemblage de valve selon la revendication 20, dans lequel l'élément élastique (12, 12a) comporte un deuxième ressort (12a) fonctionnellement associé au premier ressort (12).

22. Assemblage de valve selon la revendication 21, dans lequel le deuxième ressort (12a) a une constante élastique (K) sensiblement constante dans une plage de températures de -50°C à +50°C.

23. Assemblage de valve selon la revendication 22, dans lequel le deuxième ressort (12a) supporte une majeure partie de la charge de l'élément élastique (12, 12a).

24. Assemblage de valve selon la revendication 23, dans lequel la charge supportée par le deuxième ressort (12a) est comprise entre environ 60% et environ 95% de la charge supportée par l'élément élastique (12, 12a).

25. Assemblage de valve selon la revendication 23, dans lequel la charge supportée par le deuxième ressort (12a) est comprise entre environ 70% et environ 80% de la charge supportée par l'élément élastique (12, 12a).

26. Assemblage de valve selon l'une au moins des revendications 21 à 25, dans lequel le deuxième ressort (12a) est couplé concentriquement au dit premier ressort (12).

27. Assemblage de valve selon la revendication 26, dans lequel le deuxième ressort (12a) est externe par rapport au dit premier ressort (12).

28. Assemblage de valve selon l'une au moins des revendications 17 à 27, dans lequel la constante élastique (K) diminue lorsque la température diminue dans la plage de températures.

29. Assemblage de valve selon l'une au moins des revendications 17 à 27, dans lequel la constante élastique (K) augmente lorsque la température diminue dans la plage de températures.

30. Assemblage de valve selon l'une au moins des revendications de 17 à 29, dans lequel l'organe de fermeture primaire (17) comporte une membrane (13) ayant une première surface (13a) apte à être exposée à la pression du conduit (6), et une deuxième surface (13b) exposée à une pression de référence présente dans un environnement (11a) isolé hermétiquement de l'orifice de communication (25).

**31.** Assemblage de valve selon la revendication 30, dans lequel la deuxième surface (13b) de la membrane (13) est exposée à une pression ambiante présente à l'extérieur de l'assemblage de valve.

**32.** Assemblage de valve selon la revendication 30 ou 31, dans lequel l'organe de fermeture primaire (17) est mobile par rapport au port (9) de la valve primaire (5) en réponse à une diminution d'un gradient de pression entre la pression agissant sur la première surface (13a) et contre la deuxième surface (13b) de la membrane (13), respectivement.

**33.** Assemblage de valve selon l'une au moins des revendications de 17 à 32, dans lequel la valve primaire (5) amène le conduit (6) en communication avec l'orifice de communication (25) lorsque la pression dans le conduit (6) est inférieure d'au moins 5% à ladit pression de fonctionnement.

**34.** Roue (1) ayant une pression contrôlée, comportant :

- une jante (2) associée à un réservoir (4) destiné à être rempli avec un fluide à une première pression
- un pneu (3) monté sur la jante et ayant un volume intérieur (3') gonflable à une pression de fonctionnement, la pression de fonctionnement étant inférieure à la première pression; et
- au moins un assemblage de valve mécanique selon l'une quelconque des revendications 11 à 34 .

**35.** Roue selon la revendication 34, dans laquelle le réservoir (4) est intégré dans la jante (2).

**36.** Roue selon l'une au moins des revendications 34 et 35, dans laquelle le réservoir (4) implique un volume tel que le rapport entre le volume dudit réservoir (4) et ledit volume intérieur (3') du pneu est inclus entre environ 0,1 et environ 0,4.

**37.** Roue selon la revendication 36, dans lequel ledit rapport est compris entre environ 0,12 et environ 0,25.

**38.** Roue selon l'une au moins des revendications 34 à 37, dans laquelle ladite roue (1) comporte une valve de gonflage (19) fonctionnellement associée au réservoir (4).

**39.** Roue selon l'une au moins des revendications 34 à 38, dans laquelle ladite roue (1) comporte une valve de régulation et de restauration (20) associée au pneu (3).

EP 1 989 063 B1

FIG. 1

FIG. 2

FIG. 3

FIG. 4

EP 1 989 063 B1

FIG. 5

FIG. 6

EP 1 989 063 B1

FIG.7

FIG. 9

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6601625 B2
- US 4067376 A
- US 5293919 A
- WO 2005084967 A
- EP 305312 A